(19) Europäisches Patentamt
European Patent Office
Office européen des brevets

(11) Veröffentlichungsnummer : **0 019 075**
**B1**

(12) # EUROPÄISCHE PATENTSCHRIFT

(45) Veröffentlichungstag der Patentschrift : **11.05.83**

(51) Int. Cl.$^3$ : **G 01 B 7/28**

(21) Anmeldenummer : **80101814.4**

(22) Anmeldetag : **03.04.80**

(54) **Verfahren und Prüfgerät zum Prüfen des Zahnflankenprofils von Zahnrädern grossen Durchmessers.**

(30) Priorität : **14.05.79 CH 4452/79**

(43) Veröffentlichungstag der Anmeldung : **26.11.80 Patentblatt 80/24**

(45) Bekanntmachung des Hinweises auf die Patenterteilung : **11.05.83 Patentblatt 83/19**

(84) Benannte Vertragsstaaten : **CH DE FR GB IT LI SE**

(56) Entgegenhaltungen :
**US A 2 657 469**
**JENAER RUNDSCHAU, Band 16, Nr. 2, 1971 BERLIN (DE) E. HULTZSCH : « Die Verzahnungsmesstechnik im Wandel der Zeiten », Seiten 107-116**
**WERKSTATT UND BETRIEB, Band 93, Mai 1960, Heft 5 MUNCHEN (DE) A. K. THOMAS : « Prüfung der Zahnflankenform von Gerad- und Schrägzahnstirnrädern grosser Durchmesser durch Koordinatenmessungen », Seiten 247-248**

(73) Patentinhaber : **Maag-Zahnräder und -Maschinen Aktiengesellschaft**
**Hardstrasse 219**
**CH-8023 Zürich (CH)**

(72) Erfinder : **Sterki, Armin**
**Rinderweid 3**
**CH-8707 Uetikon/a.S. (CH)**
Erfinder : **Sommer, Gerd Robert**
**Hätschenstrasse 19**
**CH-8953 Dietikon (CH)**
Erfinder : **Naegeli, Walter, Dipl.-Ing. ETH**
**Gartenstrasse 30**
**CH-8102 Oberengstringen (CH)**

(74) Vertreter : **Hotz, Klaus, Dipl.-El.-Ing./ETH et al**
**c/o Maag-Zahnräder und -Maschinen Aktiengesellschaft Hardstrasse 219**
**CH-8023 Zürich (CH)**

**EP 0 019 075 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren und Prüfgerät zum Prüfen des Zahnflankenprofils von Zahnrädern grossen Durchmessers

Die Erfindung betrifft ein Verfahren zum Prüfen des Zahnflankenprofils von Zahnrädern grossen Durchmessers mit einem Prüfgerät, das zwei Auflagen aufweist sowie einen Messfühler, der längs einer zur Verbindungslinie der beiden Auflagen parallelen X-Achse und einer quer dazu verlaufenden Y-Achse beweglich ist, wobei die Auflagen in je eine Zahnlücke eines zu messenden Zahnrades eingesetzt und das Prüfgerät in eine Stellung gebracht wird, in der die beiden Achsen in einer zur Zahnradachse normalen Ebene liegen, sodann der Nullpunkt eines von den beiden Achsen gebildeten X-Y-Koordinatensystems festgelegt, der Messfühler anschliessend an mindestens einer Zahnflanke entlangbewegt und die dabei gemessenen Koordinaten mit Sollwerten verglichen werden.

Die Erfindung betrifft ferner ein Prüfgerät zum Durchführen eines solchen Verfahrens mit zwei Auflageschlitten, die längs einer tangential zum Zahnrad verlaufenden Führung in bezug zueinander verschiebbar sind und je eine zum Eingreifen in eine Zahnlücke geeignete Auflage tragen, und mit einer einen Messfühler tragenden Kreuzschlittenanordnung aus einem X-Schlitten, der längs einer ebenfalls tangential zum Zahnrad verlaufenden X-Führung verschiebbar ist, und einem Y-Schlitten, der längs einer zum Zahnrad radialen Y-Führung verschiebbar ist.

Mit Zahnrädern grossen Durchmessers sind im vorliegenden Zusammenhang in erster Linie Gerad- und Schrägzahn-Stirnräder ab etwa 300 mm Durchmesser gemeint, die wegen ihrer Grösse nicht oder nur unter Schwierigkeiten imstande sind, Abwälzbewegungen zum Prüfen ihrer Zahnflankenform, insbesondere ihres mehr oder weniger genau evolventenförmigen Zahnprofils mit der erforderlichen Genauigkeit auszuführen.

Es besteht seit langem das Bedürfnis, die Zahnflankenformen solcher Zahnräder entweder unmittelbar an einer Zahnflanken-Bearbeitungsmaschine oder am Einsatzort auf einfache Weise mit einem beweglichen Gerät zu prüfen. So ist aus der Zeitschrift «Werkstatt und Betrieb» 1960, Heft 5, S. 247-248 ein Verfahren der beschriebenen Gattung bekannt, bei dem zwischen zwei kugeligen Auflagen, die in je eine Zahnlücke des zu prüfenden Zahnrades eingesetzt werden, eine ungerade Zahl von Zähnen aufgenommen wird. Vor Beginn des eigentlichen Prüfvorganges wird der Messfühler, der einen ebenfalls kugeligen Fühlerkopf aufweist, in bezug auf die beiden Auflagen zentral eingestellt, so dass der Mittelpunkt des Fühlerkopfes mit der Mittenlinie des zu prüfenden Zahnes zusammenfällt. In dieser Stellung wird eine für Verschiebungen des Messfühlers längs der Y-Achse vorgesehene Messschraube auf Null eingestellt. Nach dieser Bezugseinstellung wird der Messtaster in eine der beiden benachbarten Zahnlücken gebracht und in Richtung des Zahnfusses um einen Betrag verstellt, der einem errechneten Höhenwert an einem passenden Punkt der Zahnflanke in der Nähe des Teilkreises entspricht. Sodann wird der Messfühler durch eine weitere Messschraube in Richtung der X-Achse so weit verschoben, bis der Fühlerkopf die Zahnflanke in der vorbestimmten Höhe berührt und eine die Ausschläge des Messfühlers anzeigende Messuhr ihre Nullstellung erreicht. Nun wird auch die für die Bewegungen längs der X-Achse vorgesehene Messschraube auf Null gestellt. Von dieser Ausgangsstellung aus wird der Messfühler nacheinander auf mehrere, ebenfalls im voraus gewählte oder berechnete Y-Werte eingestellt und nach jeder Einstellung längs der X-Achse gegen die Zahnflanke verschoben, bis die Messuhr Null anzeigt. Ein Vergleich der Beträge, um die der Messfühler längs der X-Achse verstellt worden ist, mit errechneten X-Achsenwerten lässt etwaige Fehler im Zahnprofil erkennen.

Dieses bekannte Prüfverfahren führt zu unbefriedigenden Ergebnissen, wenn das zu prüfende Zahnrad, wie heute üblich, an seiner Zahnkopffläche nicht oder nur ungenau geschliffen ist. In diesem Fall lässt sich durch Abtasten eines Zahnkopfes ein hinreichend genauer Bezugspunkt nicht gewinnen.

Der Erfindung liegt die Aufgabe zugrunde, das bekannte Verfahren und Prüfgerät derart weiterzubilden, dass die Zahnflankenform von Zahnrädern grossen Durchmessers, auch solchen mit nicht oder ungenau bearbeiteter Zahnkopffläche, einfach und genau gemessen werden kann, wobei es nicht darauf ankommen soll, ob ein solches Zahnrad auf einer Zahnflankenbearbeitungsmaschine eingespannt ist, auf einem Prüftisch liegt oder gar schon in ein Getriebe eingebaut ist.

Der ein Verfahren betreffende Teil der Aufgabe wird ausgehend von einem Verfahren der eingangs beschriebenen Gattung erfindungsgemäss dadurch gelöst, dass der Abstand S zwischen den beiden Auflagen gemessen und daraus der Abstand YO des Koordinatenursprungs von der Zahnradachse nach der Gleichung

$$YO = S/2 \cdot \mathrm{ctg}\,(180° \cdot KZ/Z) + C$$

bestimmt wird, wobei

C eine Konstante des Prüfgeräts,

KZ die Zahl der Zähne zwischen den beiden Auflagen und

Z die gesamte Zähnezahl des Zahnrades ist.

Es ist ohne weiteres möglich, ein Prüfgerät der beschriebenen Gattung in eine Stellung zu bringen, in der die X- und die Y-Achse in einer zur Zahnradachse normalen Ebene liegen. Hierfür sind Vorrichtungen bekannt, die sich mit drei Füssen auf eine Stirnfläche des zu prüfenden Zahnrades, und mit drei weiteren Füssen, von denen mindestens einer als Taster ausgebildet ist, auf eine ebene Fläche eines Prüfgeräts auflegen lassen. Die Vorrichtung zeigt an, in welcher Richtung das Prüfgerät verstellt werden muss, damit die genannte ebene Fläche, und somit ein dazu paralleles X-Y-Koordinatensystem des Prüfgeräts, eine zur Stirnfläche des Zahnrades parallele Lage einnimmt. Vorausgesetzt, dass die Zahnradachse sich lotrecht zu dieser Stirnfläche erstreckt, verläuft sie dann auch im rechten Winkel zu dem genannten Koordinatensystem.

Das erfindungsgemässe Verfahren lässt sich unabhängig von der Grösse des Zahnrades und der Anzahl von Zähnen, die zwischen den Auflagen aufgenommen werden, auf einfache Weise und ohne jede Bewegung des Zahnrades durchführen. Dabei hat der Benutzer die Wahl, entweder eine gerade oder eine ungerade Zähnezahl zwischen den Auflagen aufzunehmen ; im allgemeinen wählt man die grösstmögliche Zähnezahl, bei der die meist kugelförmigen Auflagen sicher an je zwei benachbarten Zahnflanken anliegen ohne dass eine dieser Zahnflanken an einen Schaft oder dergleichen stösst, auf dem die Auflage ausgebildet oder befestigt ist. In jedem Fall lässt sich der Messvorgang mit einem verhältnismässig einfachen Messfühler ausführen, der nur längs der X-Achse auslenkbar zu sein braucht und keines besonderen Schutzes gegen Ueberlastung in Richtung der Y-Achse bedarf, da Zahnkopf- oder -fussflächen bei dem erfindungsgemässen Prüfverfahren nicht abgetastet zu werden brauchen.

Bei einer bevorzugten Durchführungsweise des erfindungsgemässen Verfahrens wird der Messfühler selbst zusammen mit den ihm zugeordneten Mess- und Steuereinrichtungen zum Messen des Abstandes der beiden Auflagen verwendet, indem der Messfühler in eine durch die Stellung der einen Auflage bestimmte Bezugssstellung gebracht, dort ein die Bewegung des Messfühlers längs der X-Achse abtastender X-Abtaster aktiviert, so dass der Messfühler in eine durch die Stellung der zweiten Auflage bestimmte Bezugsstellung gebracht und dort die vom X-Abtaster zurückgelegte Strecke festgestellt wird.

Wenn wie bei dem beschriebenen bekannten Verfahren zwischen den beiden Auflagen eine ungerade Anzahl von Zähnen aufgenommen wird, dann kann der Messfühler erfindungsgemäss aus einer zurückgezogenen Stellung, die er beim Messen des Abstandes S zwischen den beiden Auflagen einnimmt, unmittelbar an eine der Zahnflanken des mittleren Zahnes zwischen den beiden Auflagen angelegt werden, worauf die zugehörigen X- und Y-Werte festgestellt werden, der Messfühler dann um den mittleren Zahn herumbewegt und an einer Stelle mit demselben Y-Wert an dessen andere Zahnflanke angelegt wird, der Mittelwert zwischen den beiden X-Werten gebildet und die Lage der Y-Achse entsprechend korrigiert wird. Hierbei wird also die anfängliche Messung des Abstandes zwischen den Auflagen nur für die Berechnung des Wertes YO, und somit für die Berechnung derjenigen Kurve verwendet, auf der sich der Mittelpunkt des Messfühlers bewegt, wenn der Messfühler ein einwandfreies Zahnflankenprofil abtastet. Teilungsfehler, die in die Messung des Abstandes zwischen den beiden Auflagen eingehen können, werden in ihrem Einfluss auf die Messung des Zahnflankenprofils weitgehend dadurch ausgeglichen, dass die tatsächliche Dicke des zu prüfenden Zahnes entsprechend der gemäss Vorstehendem vom X-Abtaster zurückgelegten Strecke berücksichtigt wird.

Entsprechendes gilt, wenn im Gegensatz zu dem beschriebenen bekannten Verfahren zwischen den beiden Auflagen eine gerade Anzahl von Zähnen aufgenommen wird ; in diesem Fall wird der Messfühler aus seiner zurückgezogenen Stellung, die er beim Messen des Abstandes S zwischen den beiden Auflagen einnimmt, unmittelbar an eine der Zahnflanken beiderseits der mittleren Zahnlücke zwischen den beiden Auflagen angelegt, es werden die zugehörigen X- und Y-Koordinaten festgestellt, dann wird der Messfühler ohne Veränderung seines Y-Wertes an die andere, die mittlere Zahnflücke begrenzende Zahnflanke angelegt, der Mittelwert zwischen den beiden X-Werten gebildet und die Lage der Y-Achse entsprechend korrigiert.

Der ein Prüfgerät betreffende Teil der beschriebenen Aufgabe wird ausgehend von einem Prüfgerät der eingangs beschriebenen Gattung insbesondere zum Durchführen des Verfahrens nach Anspruch 2 erfindungsgemäss dadurch gelöst, dass die X-Führung sich über die gesamte Strecke erstreckt, die der X-Schlitten zurückzulegen hat, um bei jedem einstellbaren Abstand der beiden Auflageschlitten voneinander den Messfühler nacheinander die Stellungen der beiden Auflageschlitten abtasten zu lassen. Bei dem beschriebenen bekannten Prüfgerät ist die X-Führung der den Messfühler tragenden Kreuzschlittenanordnung so kurz, dass der Messfühler die Stellung der beiden Auflageschlitten nicht abtasten kann ; einer der beiden Auflageschlitten, die bei dem bekannten Prüfgerät die X-Achse bestimmen, ist für den Messtaster auch wegen eines Vorsprungs der X-Führung nicht erreichbar.

Während bei dem beschriebenen bekannten Prüfgerät die Führung zum Verschieben des einen Auflageschlittens in bezug auf den anderen die X-Achse bestimmenden Auflageschlitten getrennt von der X-Führung für den Messtaster ausgebildet und im Abstand davon angeordnet ist, besteht eine bevorzugte Weiterbildung des erfindungsgemässen Prüfgeräts dahin, dass die beiden Auflageschlitten, und zwischen ihnen der X-Schlitten, auf einer gemeinsamen X-Führung verschiebbar geführt sind.

Das Verfahren gemäss Anspruch 2 liesse sich mit dem erfindungsgemässen Prüfgerät in der Weise durchführen, dass der Messfühler nacheinander unmittelbar mit den beiden die X-Achse festlegenden Auflagen in Berührung gebracht wird. Diese Auflagen können jedoch in ihrer Stellung in je einer Zahnlücke des zu prüfenden Zahnrades schwer erreichbar sein, vorallem wenn sie in der üblichen Weise kugelförmig gestaltet und an je einem verhältnismässig dünnen Schaft ausgebildet oder befestigt sind. In diesem Fall ist es zweckmässiger, wenn jeder Auflageschlitten an seiner dem anderen Auflageschlitten zugewandten Seite einen Anschlag aufweist, und der Messfühler mit zwei in X-Richtung nach beiden Seiten von ihm wegragenden Fühlerarmen verbunden ist, die sich in einer bestimmten Stellung des Y-Schlittens durch Verschieben des X-Schlittens in Berührung mit den beiden Anschlägen bringen lassen. Mit einer Verschiebung des X-Schlittens um eine Strecke, die erheblich kleiner sein kann als der Abstand zwischen den beiden Auflagen, lassen sich dank der Fühlerarme und zugehörigen Anschläge Messpunkte gewinnen, deren Abstand nur um eine Gerätekonstante vermehrt zu werden braucht, um den Abstand der Auflagen zu ergeben.

Als Voraussetzung für eine Automatisierung aller Messvorgänge ist es ferner zweckmässig, wenn an der X-Führung und der Y-Führung je ein elektronisch abtastbarer Inkrementalmassstab angeordnet ist, und der X-Schlitten sowie der Y-Schlitten je einen zugehörigen X-bzw. Y-Abtaster tragen, der an einem elektronischen Zähler anschliessbar ist.

Ein Ausführungsbeispiel der Erfindung wird im folgenden anhand schematischer Zeichnungen beschrieben. Es zeigt :

Figur 1 eine Schrägansicht einer Tasteinheit eines erfindungsgemässen Prüfgerätes beim Messen eines Zahnrades,

Figur 2 eine Seitenansicht der Tasteinheit, vom Zahnrad aus gesehen,

Figur 3 das Prinzip des Zusammenwirkens der Tasteinheit mit einem anderen Zahnrad,

Figur 4 eine stark vereinfachte Draufsicht von Teilen der Tasteinheit und des Zahnrades,

Figur 5 eine gegenüber Fig. 4 weiter vergrösserte Teildraufsicht des Zahnrades und der Tasteinheit mit Teilen der zugehörigen elektrischen Schaltung,

Figur 6 eine Draufsicht eines Steuergeräts, an das die Tasteinheit gemäss Fig. 1 anschliessbar ist,

Figur 7 ein Blockdiagramm des Steuergeräts,

Figur 8 eine vergrösserte Draufsicht einer in Fig. 1 dargestellten Tastatur,

Figur 9 ein Flussdiagramm des Programmablaufs beim Messen eines Zahnrades, und

Figur 10 ein Flussdiagramm des Programmablaufs beim Orientieren des erfindungsgemässen Prüfgeräts im Rahmen des in Fig. 9 dargestellten Programms,

Figur 11 eine Fortsetzung des Flussdiagramms der Fig. 10,

Figur 12 eine weitere Fortsetzung des Flussdiagramms der Fig. 10.

Fig. 1 zeigt einen Teil eines geradverzahnten Zahnrades 12, von dem nur einige Zähne 12′ und Zahnlücken 12″ dargestellt sind. Das Zahnrad 12, an dem einige Zahnflanken geprüft werden sollen, liegt wegen seines grossen Gewichts während des Prüfens unbeweglich auf einer Messplatte 14 oder dgl. Neben der Messplatte 14 ist ein höheneinstellbarer Tisch 16 angeordnet, auf dem der insgesamt als Tasteinheit 18 bezeichnete mechanische Teil eines erfindungsgemässen Prüfgerätes steht.

Die Tasteinheit 18 hat ein Bett 20 mit drei Füssen 22, von denen die beiden in Fig. 1 sichtbaren Füsse mit je einer Stellschraube 24 höheneinstellbar sind.

An der Oberseite des Bettes 20 ist eine Führung 26x ausgebildet, auf der ein Schlitten 28x mittels einer Gewindespindel 30x verschiebbar ist. Die Gewindespindel 30x ist an dem einen, in Fig. 1 linken Ende des Bettes 20x axial unverschiebbar gelagert und mittels eines Servomotors 32x drehantreibbar. Der Servomotor 32x ist zusammen mit einem ihm zugeordneten Tachogenerator 34x an einen Regler 36x mit Servoverstärker angeschlossen. Längs der Führung 26x ist ein Inkrementalmassstab 38x angeordnet, der mit einem am Schlitten 28x angeordneten Abtaster 40x abgetastet werden kann, so dass die Stellung des Schlittens 28x in bezug auf einen wählbaren Nullpunkt jederzeit bekannt ist.

Im rechten Winkel zur Führung 26x erstreckt sich eine Führung 26y, die auf dem Schlitten 28x ausgebildet ist. Längs der Führung 26y ist ein Schlitten 28y mittels einer Gewindespindel 30y verschiebbar. Die Gewindespindel 30y ist an dem einen, in Fig. 1 dem Betrachter zugewandten Ende des Schlittens 28x axial unverschiebbar gelagert und mittels eines Servomotors 32y drehantreibbar. Der Servomotor 32y ist zusammen mit einem ihm zugeordneten Tachogenerator 34y an einen Regler 36y mit Servoverstärker angeschlossen. Längs der Führung 26y erstreckt sich ein Inkrementalmassstab 38y, der mittels eines am Schlitten 28y angeordneten Abtasters 40y abtastbar ist.

Die Füsse 22 des Bettes 20 sind so eingestellt, dass die Führungen 26x und 26y sich beide im rechten Winkel zur Achse A des Zahnrades 12 erstrecken. Durch die Anordnung des Bettes 20 ist eine zur Führung 26x parallele, die Zahnradachse A schneidende X-Achse festgelegt, und dementsprechend auch eine Y-Achse im rechten Winkel schneidet und sich parallel zur Führung 26y erstreckt. Wegen dieses Zusammenhanges mit der X- bzw Y-Achse werden die Führungen 26x und 26y auch X- bzw Y-Führung genannt, und dementsprechend werden die Schlitten 28x und 28y als X- bzw Y-Schlitten bezeichnet.

Der Y-Schlitten 28y trägt einen Messfühler 42, der innerhalb eines an diesem Schlitten befestigten Fühlergehäuses 44 derart gelagert ist, dass sein kugelförmiges freies Ende in Richtung der X-Achse hin- und herbeweglich ist, wobei die Möglichkeit besteht, zwischen zwei Anschlagstellungen zu wählen, nämlich einer in Fig. 1 und 4 linken Anschlagstellung, in welche der Messfühler 42 vorgespannt wird, wenn er eine rechte Zahnflanke abzutasten hat, und eine rechte Anschlagstellung, in welche der Messfühler vorgespannt wird, wenn er eine linke Zahnflanke abzutasten hat. Der Weg des kugelförmigen Endes des Messfühlers 42 zwischen diesen beiden Anschlagstellungen ist sehr gering ; innerhalb des Fühlergehäuses 44 ist ein Signalgeber bekannter Art angeordnet, der erkennbar macht, wenn der Messfühler 42 aus derjenigen Anschlagstellung, in die er vorgespannt ist, in eine Mittelstellung verdrängt worden ist.

Der Messfühler 42 ist mit zwei Fühlerarmen 46 verbunden, die nach beiden Seiten parallel zur X-Achse aus dem Fühlergehäuse 44 herausragen.

Beiderseits des Schlittens 28x ist auf der Führung 26x je ein Auflageschlitten 48 geführt; beide Auflageschlitten sind ohne eigenen Antrieb und lassen sich gegen die von ihrem Gewicht hervorgerufene Reibung längs der Führung 26x, also in Richtung der X-Achse, verschieben. An jedem der beiden Auflageschlitten 48 ist eine Auflage 50 befestigt. Die beiden Auflagen 50 sind vorzugsweise, wie dargestellt, als kugelförmige freie Enden je eines am zugehörigen Auflageschlitten 48 auswechselbar festgeklemmten Bolzens ausgebildet.

An den beiden Auflageschlitten 48 ist ausserdem je ein bolzenförmiger Anschlag 52 befestigt, der sich parallel zur X-Achse in Richtung zu der von den Schlitten 28x und 28y gebildeten Kreuzschlittenanordnung erstreckt. Der Schlitten 28y lässt sich in eine vom Zahnrad 12 zurückgezogene Stellung bringen, in der seine beiden Fühlerarme 46 mit den bolzenförmigen Anschlägen 52 der Auflageschlitten fluchten. Diese zurückgezogene Stellung kann beispielsweise als Nullstellung des Schlittens 28y definiert werden.

Der in Fig. 1 rechte Auflageschlitten 48 weist in seinen für den Benutzer des Prüfgerätes leicht zugänglichen und überschaubaren, von der zugehörigen Auflage 50 abgewandten Bereich eine Tastatur 54 auf, die in Fig. 8 deutlicher dargestellt ist.

Die in Fig. 1 vom Betrachter abgewandte und dem Zahnrad 12 zugewandte, in Fig. 2 dargestellte Seite der Tasteinheit 18 weist einen Hilfskugelbolzen 56 auf, der am Bett 20 parallel zur X-Achse verschiebbar geführt und neben den Auflagen 50 als dritte Abstützung der Tasteinheit 18 für den Fall vorgesehen ist, dass das Zahnflankenprofil eines Zahnrades 12 mit waagerechter Achse A geprüft werden soll. In diesem Fall wird die Tasteinheit 18 abweichend von Fig. 1 und 2 nicht auf den Tisch 16 gestellt, sondern hochkant auf das Zahnrad 12 selbst gesetzt, wobei die beiden Auflagen 50 und der Hilfskugelbolzen 56 nach unten weisen und in je eine Zahnlücke 12″ des Zahnrades 12 eingreifen. Dabei ist übereinstimmend mit Fig. 1 der Messfühler 42 auf der Verbindungsgeraden zwischen den beiden Auflagen 50 angeordnet; gegen diese Gerade ist der Hilfskugelbolzen 56 in Richtung der Zahnradachse A versetzt, so dass sich eine sichere Dreipunktabstützung der Tasteinheit 18 ergibt, wie aus Fig. 3 ersichtlich ist.

Die geometrischen Voraussetzungen für das Prüfen des Zahnflankenprofils sind in Fig. 4 dargestellt. Von dem zu prüfenden Zahnrad 12 ist unter anderem die Zähnezahl Z bekannt. Der Benutzer hat das Prüfgerät so angeordnet, dass die beiden Auflagen 50 in je eine Zahnlücke 12″ des Zahnrades 12 eingreifen und an den benachbarten Zahnflanken anliegen. Somit ist auch die Anzahl KZ der Zähne zwischen den beiden Auflagen 50 bekannt; gemäss Fig. 4 sind es vier Zähne 12. Bekannt ist ferner der in Richtung der Y-Achse gemessene Betrag C, um den der Mittelpunkt des kugelförmigen Kopfes des Messfühlers 42 hinter die Verbindungslinie der Mittelpunkte der beiden kugelförmigen Auflagen 50 zurückversetzt ist, wenn der Y-Schlitten 28y seine an sich frei wählbare Nullstellung einnimmt, beispielsweise die erwähnte Stellung, in der die Fühlerarme 46 mit den bolzenförmigen Anschlägen 52 fluchten.

Vom Prüfgerät aus gesehen unbekannt ist der Mittelpunkt des Zahnrades 12; somit ist auch die Strecke YO unbekannt, um die der Messfühler 42 vom Mittelpunkt oder der Achse A des Zahnrades 12 entfernt ist, wenn der Y-Schlitten 28y, wie in Fig. 4 dargestellt, seine Nullstellung einnimmt. Unbekannt ist ebenfalls der Abstand KR des Mittelpunkts jeder der beiden Auflagen 50 vom Mittelpunkt bzw der Achse A des Zahnrades 12. Bei gegebener Zähnezahl Z des Zahnrades und gewählter Anzahl KZ der zwischen den Auflagen 50 aufgenommenen Zähne 12′ lässt sich der Winkel δ aus folgender Gleichung berechnen:

$$\delta° = 180°/Z \cdot KZ \quad (1)$$

Für die noch unbekannte Grösse KR gilt folgende Gleichung:

$$KR = S_{/2}/\sin \delta \quad (2)$$

wobei S gemäss Fig. 4 den Abstand der Mittelpunkte der beiden Auflagen 50 voneinander bezeichnet. Aus Fig. 4 lässt sich ferner ableiten:

$$YO = KR \cdot \cos \delta + C \quad (3)$$

Setzt man (1) und (2) in (3) ein, so ergibt sich:

$$YO = S/2 \cdot \text{ctg}\,(180° \cdot KZ/Z) + C \quad (4)$$

Der Wert YO lässt sich also durch eine Messung des Abstandes S und anhand der bekannten Zahlen Z und KZ ermitteln, und daraus ergibt sich für das Prüfgerät die Lage der X-Achse. Die Y-Achse verläuft durch die Mitte zwischen den Mittelpunkten der beiden kugelförmigen Auflagen 50, sofern das Zahnrad 12 frei von Zahnteilungsfehlern ist. Dass dies so sei, kann für die Orientierung der Tasteinheit 18 in bezug auf das Zahnrad 12 angenommen werden. Zum Orientieren der Tasteinheit 18 genügt es also, den Abstand S zu messen und daraus S/2 sowie YO zu berechnen.

Fig. 5 lässt vorallem die Schaltungsanordnung von elektrischen bzw. elektronischen Bauteilen erkennen, die in der Beschreibung der Fig. 1 schon erwähnt sind. Uebereinstimmend mit Fig. 1 sind in Fig. 5 elektrische Leitungen a bis f dargestellt, die folgende Bedeutung haben:

Durch die Leitung a kann dem X-Regler und -servoverstärker 36x ein X-Sollwert zugeführt werden ; über die Leitung f meldet der X-Abtaster 40x den Stellungs-Istwert des X-Schlittens 28x. Ueber die Leitung c kann dem Y-Regler und -servoverstärker 36y ein Y-Sollwert zugeführt werden ; über die Leitung e meldet der Y-Abtaster 40y die Iststellung des Y-Schlittens 28y. Ueber die Leitung b lässt sich der Messfühler 42 ansteuern und wie beschrieben wahlweise nach links oder nach rechts vorspannen, damit er wahlweise eine rechte oder eine linke Zahnflanke abtasten kann. Der Messfühler 42 gibt Tastersignale über eine Leitung d ab. Diese Tastersignale können über einen Umschalter 58 und die Leitung a dem X-Regler und -servoverstärker 36x zugeführt werden, damit der Messfühler 42 dem von ihm abgetasteten Zahnflankenprofil selbsttätig nachgeführt wird. Alternativ kann der X-Regler und -servoverstärker 36x Sollstellungssignale von einem in Fig. 7 dargestellten Rechner erhalten.

Die beschriebenen Leitungen a bis f sowie eine zusätzliche, von der Tastatur 54 ausgehende Leitung g sind in einem Kabel zusammengefasst und verbinden die Tasteinheit 18 mit einem Steuergerät 62, das in Fig. 6 äusserlich dargestellt ist. Zu den von aussen sichtbaren Bauteilen des Steuergeräts 62 gehören ein Anschluss 64 für das erwähnte Kabel, ein Netzschalter 66, ein Schreibgerät 68 mit Diagrammpapier 70, auf dem Profildiagramme 72 und 72′ für jeweils eine rechte und eine linke Zahnflanke aufgezeichnet werden können, ferner eine Leuchtanzeige 74, die den Beginn einer Messung anzeigt, und eine Tastatur 78. Die Beschriftung der Tasten der Tastatur 78 bedeutet folgendes :

| | | |
|---|---|---|
| ENTER | = | Aufnahmetaste |
| CL | = | Löschtaste |
| N | = | Nummerntaste zum Bezeichnen des gemessenen Zahnes |
| R | = | Wiederholungstaste |
| ST | = | Stillsetzen des Antriebs des Messfühlers 42 |
| 0 - 9 | = | Zifferntasten |
| Pfeile | = | Schreibfeder- und Papier-Positionierung im Schreibgerät 68 |
| Punkt | = | Vergrösserungsfaktor der Profildiagramme 72 und 72′ |
| Minuszeichen | = | Dokumentationsdateneingabe |

In Fig. 7 ist die Schaltungsanordnung des in Fig. 6 äusserlich dargestellten Steuergeräts 62 als Blockschaltbild dargestellt ; dabei stimmen die Leitungen a bis g mit den gleich benannten Leitungen in Fig. 1 und 5 überein. Zu dieser Schaltungsanordnung gehören neben den schon anhand der Fig. 6 beschriebenen Baugruppen elektronische Einheiten 80a bis 80g, deren Buchstabe jeweils mit demjenigen der zugehörigen Leitung a bis g übereinstimmt. Es handelt sich um je eine

Steuereinheit 80a für die Bewegungen des Schlittens 28x längs der X-Achse,

Steuereinheit 80b, über die der Messfühler 42 in der beschriebenen Weise angesteuert und wahlweise nach rechts oder nach links zum Abtasten einer rechten Zahnflanke vorgegeben ist und eine Vorspannung nach rechts jeweils nur durch ein Signal von der Steuereinheit 80b bewirkt wird,

Steuereinheit 80c für die Bewegungen des Schlittens 28y längs der Y-Achse,

Aufbereitungseinheit 80d für die vom Messfühler 42 abgegebenen Signale,

Aufbereitungseinheit 80e für die vom Abtaster 40y abgegebenen Signale ; diese Einheit enthält zusätzlich einen Y-Zähler und einen Y-Komparator, von denen die Signale des Abtasters 40y gezählt und mit einem voreingestellten Wert verglichen werden können,

Aufbereitungseinheit 80f mit X-Zähler für die vom Abtaster 40x abgegebenen Signale, und Uebertragungseinheit 80g für eingetastete Bedienungssignale.

Die Einheiten 80a bis 80d enthalten je einen Digital-Analog-Wandler. Alle genannten Einheiten 80a bis 80g sind ebenso wie das Schreibgerät 68, die Leuchtanzeige 74 und die Tastatur 78 an einen Adapter 82 angeschlossen, der seinerseits über eine Vielfachleitung 84 mit einem Rechner 86 und einem Speicher 88 verbunden ist.

Die gemäss Fig. 1 an dem dort rechts dargestellten Auflageschlitten 48 angeordnete Tastatur 54 ist, wie sich aus dem Vorstehenden ergibt, über die Leitung g und die Einheit 80g des Steuergeräts 62 mit dessen Adapter 82 verbunden. Die Beschriftung der Tasten der Tastatur 54 in Fig. 8 bedeutet folgendes :

| | | |
|---|---|---|
| TT | = | Nachführung des Messfühlers 42 |
| LF | = | Vorspannen des Messfühlers 42 nach rechts zum Abtasten einer linken Zahnflanke |
| F | = | zahnfussseitigen Endpunkt des abzutastenden Zahnflankenbereichs setzen |
| K | = | zahnkopfseitigen Endpunkt des abzutastenden Flankenbereichs setzen |
| STOP | = | Antrieb der Schlitten 28x und 28y stillsetzen |
| CLR | = | Auflösetaste zum Löschen der Befehle für selbsttätige Nachführung des Messfühlers 42 und der gesetzten zahnfuss- und zahnkopfseitgen Endpunkte |
| PFEILE | = | Richtungstasten für manuelles Fahren der Schlitten 28x und 28y. |

Das in Fig. 9 dargestellte Flussdiagramm zeigt die Vorgereitung und den Ablauf der Prüfung eines Zahnflankenprofils ; der in diesem Flussdiagramm enthaltene Vorgang « ORIENTIEREN » ist in Fig. 10 in einem gesonderten Flussdiagramm dargestellt, und zwar für die beiden möglichen Fölle, dass die Anzahl KZ der zwischen den Auflagen 50 angeordneten Zähne 12′ eine gerade oder eine ungerade Zahl ist. Die Darstellung der Flussdiagramme ist normgemäss ; die verschiedenen Formen der einzelnen Kästen bedeutet :

Trapez, nach unten verjüngt : vorbereitende manuelle Tätigkeit des Benutzers,

Trapez, nach links verjüngt : Dateneingabe durch den Benutzer,

Raute mit Doppellinien rechtsoben : Entscheidung des Benutzers, durch Tastendruck einzugeben,

Rechteck : Rechen- oder sonstiger Vorgang, der vom Steuergerät 62 gesteuert wird,

einfache Raute : Frage, die vom Steuergerät 62 gestellt und bearbeitet wird.

Gemäss Fig. 9 ist das Prüfprogramm in mehrere Segmente 1 bis 5 unterteilt, innerhalb derer der Programmablauf wiederholt werden kann, ohne dass andere Segmente davon berührt werden ; dies ist am linken Rand der Fig. 9 mit Pfeilen angedeutet. Darüberhinaus bedarf nur der Vorgang « ORIENTIEREN » einer Erläuterung, die im folgenden anhand der Fig. 10 gegeben wird.

Der erste Befehl « Fahre Y-Schlitten in Orientierungsposition » bewirkt, dass der Schlitten 28y eine Stellung einnimmt, in der die Fühlerarme 46 mit den beiden bolzenförmigen Anschlägen 52 fluchten. Diese Stellung behält der Schlitten 28y bei, während infolge des Befehls « Taster-Vorspannung linke Flanke » der Messfühler 42 gemäss Fig. 1 nach rechts vorgespannt wird, so als hätte er eine linke Zahnflanke abzutasten. Der Befehl « Fahre X-Schlitten nach rechts » lässt den Schlitten 28x soweit nach rechts fahren, bis der rechte Fühlerarm 46 gegen den Anschlag 52 des rechten Auflageschlittens 48 stösst und infolgedessen der mit den Fühlerarmen 46 verbundene Messfühler 42 gegen seine Vorspannung in seine Nullstellung gebracht wird, so als hätte er eine linke Zahnflanke ertastet.

Der Befehl « Schalte auf Taster-Nachführung und halte X-Position » hat zur Folge, dass die Aufbereitungseinheit 80f für vom Abtaster 40x abgegebene Signale aufnahmebereit gemacht wird. Der Befehl « Setze X-Zähler auf Null » schafft die Voraussetzung dafür, dass die anschliessend vom Schlitten 28x bei seiner Bewegung nach links zurückgelegte Strecke am X-Zähler ablesbar ist. Ehe der Schlitten 28x den Befehl erhält, nach links zu fahren, lässt der Befehl « Taster-Vorspannung rechte Flanke » den Messfühler 12 seine linke Anschlagstellung einnehmen, so als hätte er eine rechte Zahnflanke abzutasten. Sodann fährt der Schlitten 28x nach links bis der linke Fühlerarm 46 gegen den Anschlag 52 des linken Auflageschlittens 48 stösst und dadurch den Messfühler 42 in seine Nullstellung bringt. In der so erreichten Stellung wird der Schlitten 28x bei weiterhin unveränderten Stellung des Schlittens 28y festgehalten, bis der Stand des X-Zählers von der Aufbereitungseinheit 80f abgelesen und in den Speicher 88 übertragen worden ist.

Damit ist der Abstand S zwischen den beiden Auflagen 50 festgestellt, denn er unterscheidet sich von der Strecke, die der Schlitten 28x zurückgelegt hat, allenfalls um einen konstanten Betrag, der von der Gestaltung der Auflageschlitten 48 und von Anordnung und Länge der Anschläge 52 sowie der Fühlerarme 46 abhängt und als Gerätekonstante gespeichert ist.

Der weitere Verlauf des Orientierungsprogramms ist anhand der Figuren 10, 11 und 12, sowie des einleitenden Teils dieser Beschreibung ohne weiteres verständlich.

## Ansprüche

1. Verfahren zum Prüfen des Zahnflankenprofils von Zahnrädern grossen Durchmessers, mit einem Prüfgerät, das zwei Auflagen aufweist sowie einen Messfühler, der längs einer zur Verbindungslinie der beiden Auflagen parallelen X-Achse und einer quer dazu verlaufenden Y-Achse beweglich ist, wobei die Auflagen in je eine Zahnlücke eines zu messenden Zahnrades eingesetzt werden und das Prüfgerät in eine Stellung gebracht wird, in der die beiden Achsen in einer zur Zahnradachse normalen Ebene liegen, sodann der Nullpunkt eines von den beiden Achsen gebildeten X-Y-Koordinatensystems festgelegt, der Messfühler anschliessend an mindestens einer Zahnflanke entlangbewegt und die dabei gemessenen Koordinaten mit Sollwerten verglichen werden, dadurch gekennzeichnet, dass der Abstand (S) zwischen den beiden Auflagen (50) gemessen und daraus der Abstand (YO) des Koordinatenursprungs von der Zahnradachse (A) nach der Gleichung

$$YO = S/2 \cdot ctg\ (180° \cdot KZ/Z) + C$$

bestimmt wird, wobei

C eine Konstante des Prüfgeräts,

KZ die Zahl der Zähne (12') zwischen den beiden Auflagen (50) und

Z die gesamte Zähnezahl des Zahnrades (12) ist.

2. Verfahren nach Anspruch 1, dadurch gekennzeichnet, dass der Messfühler (42) zum Messen des Abstandes (S) der beiden Auflagen (50) in eine durch die Stellung der einen Auflage (50) bestimmte Bezugsstellung gebracht, dort ein die Bewegung des Messfühlers (42) längs der X-Achse abtastender X-Abtaster (40x) aktiviert, sodann der Messfühler (42) in eine durch die Stellung der zweiten Auflage (50) bestimmte Bezugsstellung gebracht und dort die vom X-Abtaster (40x) zurückgelegte Strecke festgestellt wird.

3. Verfahren nach Anspruch 1 oder 2, bei dem zwischen den beiden Auflagen eine ungerade Anzahl von Zähnen aufgenommen wird, dadurch gekennzeichnet, dass der Messfühler (42) aus einer zurückgezogenen Stellung, die er beim Messen des Abstandes (S) einnimmt, unmittelbar an eine der Zahnflanken des mittleren Zahnes (12') zwischen den beiden Auflagen (50) angelegt wird, die zugehörigen X- und Y-Werte festgestellt werden, der Messfühler (42) dann um den mittleren Zahn (12') herumbewegt und an einer Stelle mit demselben Y-Wert an dessen andere Zahnflanke angelegt wird, der Mittelwert zwischen den beiden X-Werten gebildet und die Lage der Y-Achse entsprechend korrigiert wird.

4. Verfahren nach Anspruch 1 oder 2, dadurch gekennzeichnet, dass zwischen den beiden Auflagen (50) eine gerade Anzahl von Zähnen (12') aufgenommen wird und der Messfühler (42) aus einer zurückgezogenen Stellung, die er beim Messen des Abstandes (S) zwischen den beiden Auflagen (50) einnimmt, unmittelbar an eine der Zahnflanken beiderseits der mittleren Zahnlücke (12") zwischen den beiden Auflagen (50) angelegt wird, die zugehörigen X- und Y-Koordinaten festgestellt werden, der Messfühler (42) dann ohne Veränderung seines Y-Wertes an die andere, die mittlere Zahnlücke (12") begrenzende Zahnflanke angelegt wird, der Mittelwert zwischen den beiden X-Werten gebildet und die Lage der Y-Achse entsprechend korrigiert wird.

5. Prüfgerät zum Durchführen des Verfahrens nach Anspruch 2, mit zwei Auflageschlitten, die längs einer tangential zum Zahnrad verlaufenden Führung in bezug zueinander verschiebbar sind und je eine zum Eingreifen in eine Zahnlücke geeignete Auflage tragen, und mit einer einen Messfühler tragenden Kreuzschlittenanordnung aus einem X-Schlitten, der längs einer ebenfalls tangential zum Zahnrad verlaufenden X-Führung verschiebbar ist, und einem Y-Schlitten, der längs einer zum Zahnrad radialen Y-Führung verschiebbar ist, dadurch gekennzeichnet, dass die X-Führung (26x) sich über die gesamte Strecke erstreckt, die der X-Schlitten (28x) zurückzulegen hat, um den Messfühler (42) nacheinander die Stellungen der beiden Auflageschlitten (48) abtasten zu lassen.

6. Prüfgerät nach Anspruch 5, dadurch gekennzeichnet, dass die beiden Auflageschlitten (48), und zwischen ihnen der X-Schlitten (28x), auf einer gemeinsamen X-Führung (26x) verschiebbar geführt sind.

7. Prüfgerät nach Anspruch 5 oder 6, dadurch gekennzeichnet, dass jeder Auflageschlitten (48) an seiner dem anderen Auflageschlitten (48) zugewandten Seite einen Anschlag (52) aufweist und der Messfühler (42) mit zwei in X-Richtung nach beiden Seiten von ihm wegragenden Fühlerarmen (46) verbunden ist, die sich in einer bestimmten Stellung des Y-Schlittens (28y) durch Verschieben des X-Schlittens (28x) in Berührung mit den beiden Anschlägen (52) bringen lassen.

8. Prüfgerät nach einem der Ansprüche 5 bis 7, dadurch gekennzeichnet, dass an der X-Führung (26x) und der Y-Führung (26y) je ein elektronisch abtastbarer Massstab (38x bzw 38y) angeordnet ist und der X-Schlitten (28x) sowie der Y-Schlitten (28y) je einen zugehörigen X- bzw Y-Abtaster (40x bzw 40y) tragen, die an einen elektronischen Zähler anschliessbar ist.

**Claims**

1. A method of testing the tooth flank profile of large diameter toothed wheels with a testing instrument having two supports as well as a sensor which is movable along an X-axis parallel to the connecting line between the two supports and a Y-axis running transversely thereto, wherein the supports are each inserted into a tooth space of a toothed wheel to be measured and the testing instrument is brought into a position in which the two axes lie in a plane normal to the toothed wheel axis, the zero point of a X-Y-coordinate system formed by the two axes is determined, the sensor is then moved along on at least one tooth flank and the coordinates measured thereby compared with set values, characterised in that the distance S between the two supports 50 is measured and the distance YO of the coordinate origin from the toothed wheel axis A is determined in accordance with the equation

$$YO = S/2 \cdot \cot(180° \cdot KZ/Z) + C$$

wherein

C is a constant of the testing instrument ;

KZ is the number of teeth 12' between the two supports 50 ;

Z is the total number of teeth on the toothed wheel 12.

2. A method according to Claim 1, characterised in that the sensor 42 is brought into a reference position determined by the position of one of the supports 50 for measuring the distance S between the two supports 50, actuates an X-scanner 40x scanning the movement of the sensor 42 along the X-axis there, then the sensor 42 is brought into a reference position determined by the position of the second support 50 and the length covered by the X-scanner 40x is determined there.

3. A method according to Claim 1 or 2, in which an uneven number of teeth is accommodated between the two supports, characterised in that the sensor 42 is taken from a retracted position which it assumes during measurement of the distance S and placed directly on to one of the tooth flanks of the central tooth 12' between the two supports 50, the respective X and Y values are determined, the sensor 42 is then moved round the central tooth 12' and placed at a position with the same Y-value on its other tooth flank, the mean value between the two X-values is formed and the position of the Y-axis corrected accordingly.

4. A method according to Claim 1 or 2, characterised in that an even number of teeth 12' is accommodated between the two supports 50 and the sensor 42 is taken from a retracted position which it assumes during measurement of the distance S between the two supports 50 and placed directly on to one of the tooth flanks on each side of the central tooth space 12" between the two supports 50, the respective X and Y coordinates are determined, the sensor 42 is then placed on to the other tooth flank determining the central tooth space 12" without altering its Y-value, the mean value between the two X-values is formed and the position of the Y-axis corrected accordingly.

5. A testing instrument for carrying out the method according to Claim 2, with two support slides which are movable relative to each other along a guide running tangentially to the toothed wheel and each bear a support which is suitable for meshing into a tooth space and with a compound slide bearing a sensor and composed of a X-slide which is movable along an X-guide also running tangentially to the toothed wheel, and of a Y-slide which is movable along a Y-guide which is radial to the toothed wheel, characterised in that the X-guide 26x extends over the entire length covered by the X-slide 28x so as to allow the sensor 42 to scan the positions of the two support slides 48 in succession.

6. A testing instrument according to Claim 5, characterised in that the two support slides 48 and the X-slide 28x between them are guided movably on a common X-guide 26x.

7. A testing instrument according to Claim 5 or 6, characterised in that each support slide 48 has a stop 52 on its side facing the other support slide 48 and the sensor 42 is connected to two sensor arms 46 which project away from it toward both sides in the X-direction and which can be brought into contact with the two stops 52 in a certain position of the Y-slide 28y by moving the X-slide 28x.

8. A testing instrument according to one of Claims 5 to 7, characterised in that a respective electronically scannable scale 38x or 38y is arranged on the X-guide 26x and the Y-guide 26y, and the X-slide 28x as well as the Y-slide 28y each bear a respective X or Y scanner (40x or 40y) which can be connected to an electronic counter.

**Revendications**

1. Procédé pour contrôler le profil des flancs de dent d'une roue dentée de grand diamètre, au moyen d'un appareil de contrôle qui comprend deux appuis ainsi qu'une touche qui peut se déplacer le long d'un axe X parallèle à la ligne joignant les deux appuis et le long d'un axe Y transversal à l'axe X, dans lequel on engage les appuis chacun dans un entredent de la roue dentée à contrôler et on place l'appareil de contrôle dans une position dans laquelle les deux axes sont contenus dans un plan perpendiculaire à l'axe de la roue dentée ; on détermine l'origine d'un système de coordonnées X-Y formé par les deux axes, puis on déplace la touche de mesure le long d'au moins un flanc de dent et on compare les coordonnées mesurées pendant ce déplacement à des valeurs de consigne, caractérisé en ce qu'on mesure la distance (S) séparant les deux appuis (50) et à partir de cette distance, on détermine la distance (YO) séparant l'origine des coordonnées de l'axe (A) de la roue dentée par l'équation.

$$YO = S/2 \cdot ctg\ (180° \cdot KZ/Z) + C$$

où

C est une constante de l'appareil de contrôle

KZ est le nombre des dents (12') comprises entre les deux appuis (50)

Z est le nombre total des dents de la roue dentée (12).

2. Procédé suivant la revendication 1, caractérisé en ce que, pour mesurer la distance (S) séparant les deux appuis (50), on place la touche (42) dans une position de référence déterminée par la position de l'un des appuis (50), là on active un capteur X (40x) qui capte le déplacement de la touche (42) le long de l'axe X, ensuite, on place la touche (42) dans une position de référence déterminée par la position du deuxième appui (50) et là, on détermine la distance parcourue par le capteur X (40x).

3. Procédé suivant l'une des revendications 1 et 2, caractérisé en ce que, dans le cas où un nombre impair de dents est compris entre les deux appuis, on place la touche (42), en partant de sa position en retrait qu'elle occupe lors de la mesure de la distance (S), directement en appui contre l'un des flancs de la dent (12') située au milieu entre les deux appuis (50), on mesure les coordonnées X et Y correspondantes, on déplace la touche de mesure (42) suivant un trajet qui contourne cette dent (12') centrale et on la met en appui contre l'autre flanc de cette dent en un point ayant la même coordonnée Y, on forme la moyenne des deux coordonnées X et on corrige la position de l'axe Y en conséquence.

4. Procédé suivant l'une des revendications 1 et 2, caractérisé en ce qu'on prend un nombre pair de dents (12') entre les deux appuis (50) et on met la touche (42), en partant de sa position en retrait qu'elle occupe lors de la mesure de la distance (S) entre les deux appuis (50), directement en appui contre l'un des flancs situés de part et d'autre de l'entredent (12") situé au milieu entre les deux appuis (50), on mesure les coordonnées X et Y de la position obtenue, on met ensuite la touche (42) en appui contre l'autre des flancs qui limitent l'entredent (12") central, sans modifier la coordonnée Y de la touche, on forme la moyenne des deux coordonnées X et on corrige la position de l'axe Y en conséquence.

5. Appareil de contrôle pour la mise en œuvre du procédé suivant la revendication 2, comprenant deux chariots porte-appui qui peuvent se déplacer en translation l'un par rapport à l'autre le long d'un guide orienté tangentiellement à la roue dentée et qui portent chacun un appui approprié pour s'engager dans un entredent et un mécanisme à chariots croisés portant une touche, ce mécanisme comprenant un chariot X qui peut se déplacer en translation le long d'un guide X orienté également tangentiellement à la roue dentée et un chariot Y qui peut se déplacer en translation le long d'un guide orienté radialement par rapport à la roue dentée, caractérisé en ce que le guide X (26x) s'étend sur toute la distance que le chariot X (28x) a à parcourir pour permettre à la touche (42) d'explorer l'une après l'autre les positions des deux chariots porte-appui (48).

6. Appareil de contrôle suivant la revendication 5, caractérisé en ce que les deux chariots porte-appui (48) et, entre eux, le chariot X (28x) sont guidés pour se déplacer en translation sur un guide X commun (26x).

7. Appareil de contrôle suivant l'une des revendications 5 et 6, caractérisé en ce que chaque chariot porte-appui (48) présente une butée (52) sur son côté dirigé vers l'autre chariot porte-appui (48) et en ce que la touche (42) est solidaire de deux bras (46) qui font saillie sur elle dans les deux sens de la direction X et qui peuvent être mis en contact avec les deux butées (52) par déplacement en translation du chariot X (28x) lorsque le chariot Y (28y) se trouve dans une certaine position.

8. Appareil de contrôle suivant l'une des revendications 5 à 7, caractérisé en ce qu'à chacun des guides, le guide X (26x) et le guide Y (26y), est associée une échelle graduée (38x ou 38y) pouvant être explorée électroniquement et en ce que le chariot X (28x) et le chariot Y (28y) portent chacun un capteur correspondant X ou Y (40x ou 40y) qui peut être connecté à un compteur électronique.

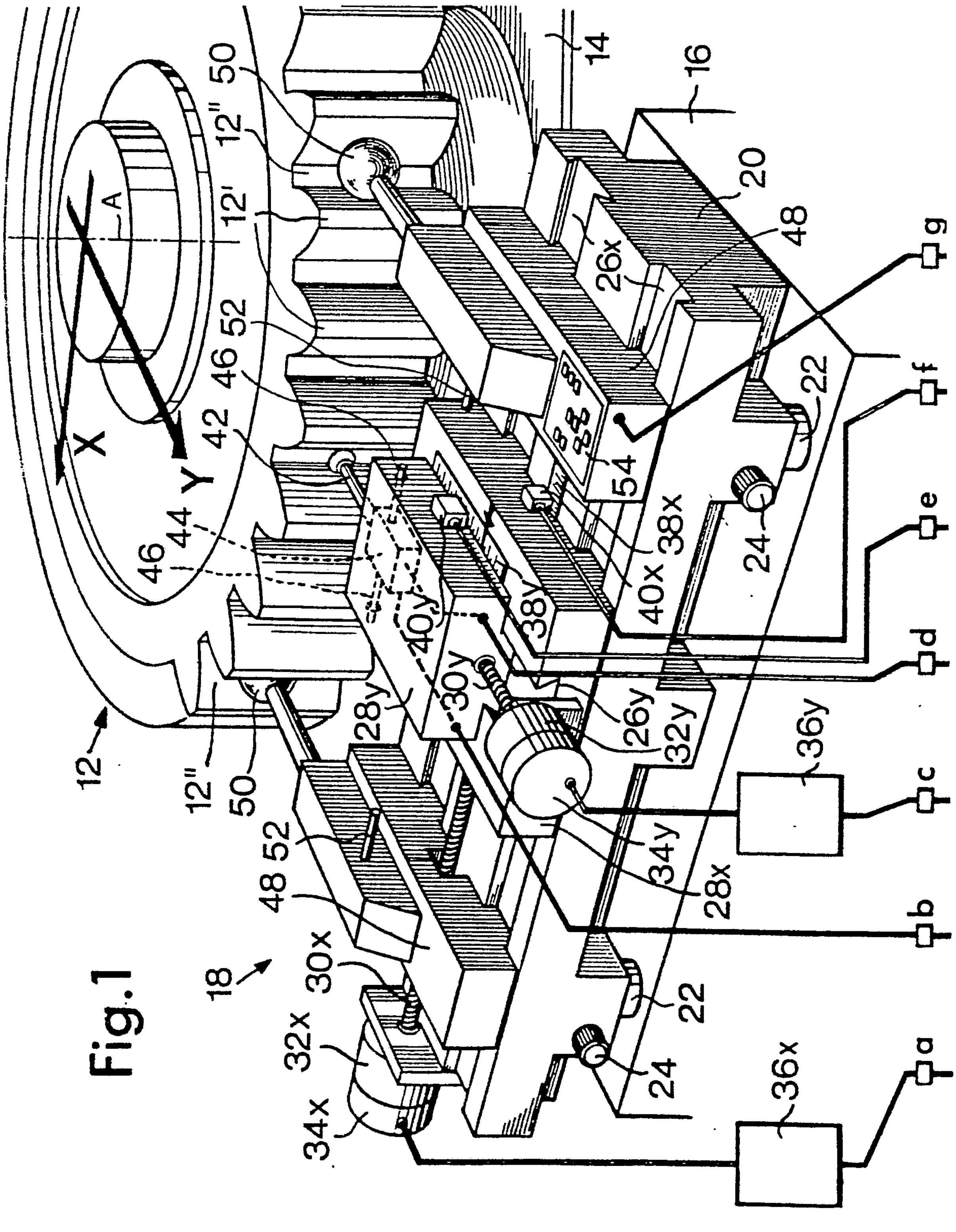

12
12'
12"
14
16
18
20
22
24
26x
26y
28x
28y
30x
30y
32x
32y
34x
34y
36x
36y
38x
38y
40x
40y
42
44
46
48
50
52
54
A
X
Y
a
b
c
d
e
f
g

Fig.1

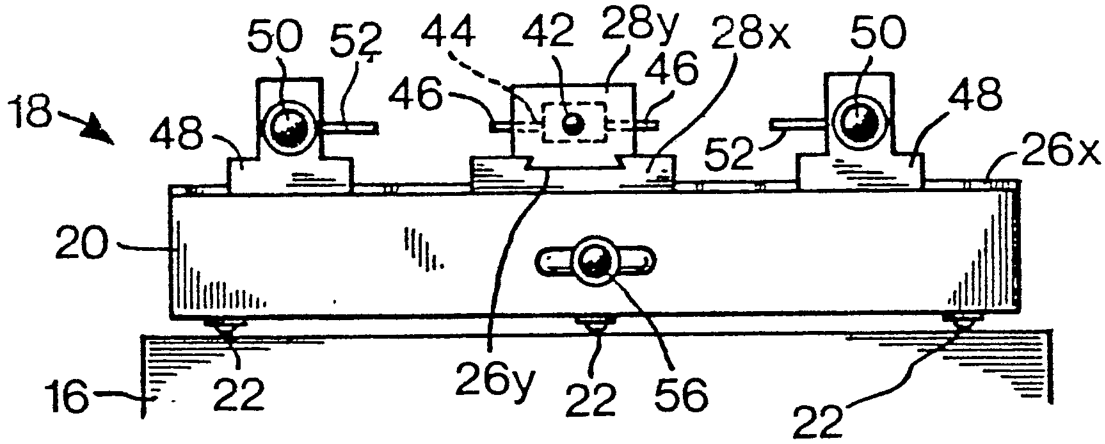


Fig.2

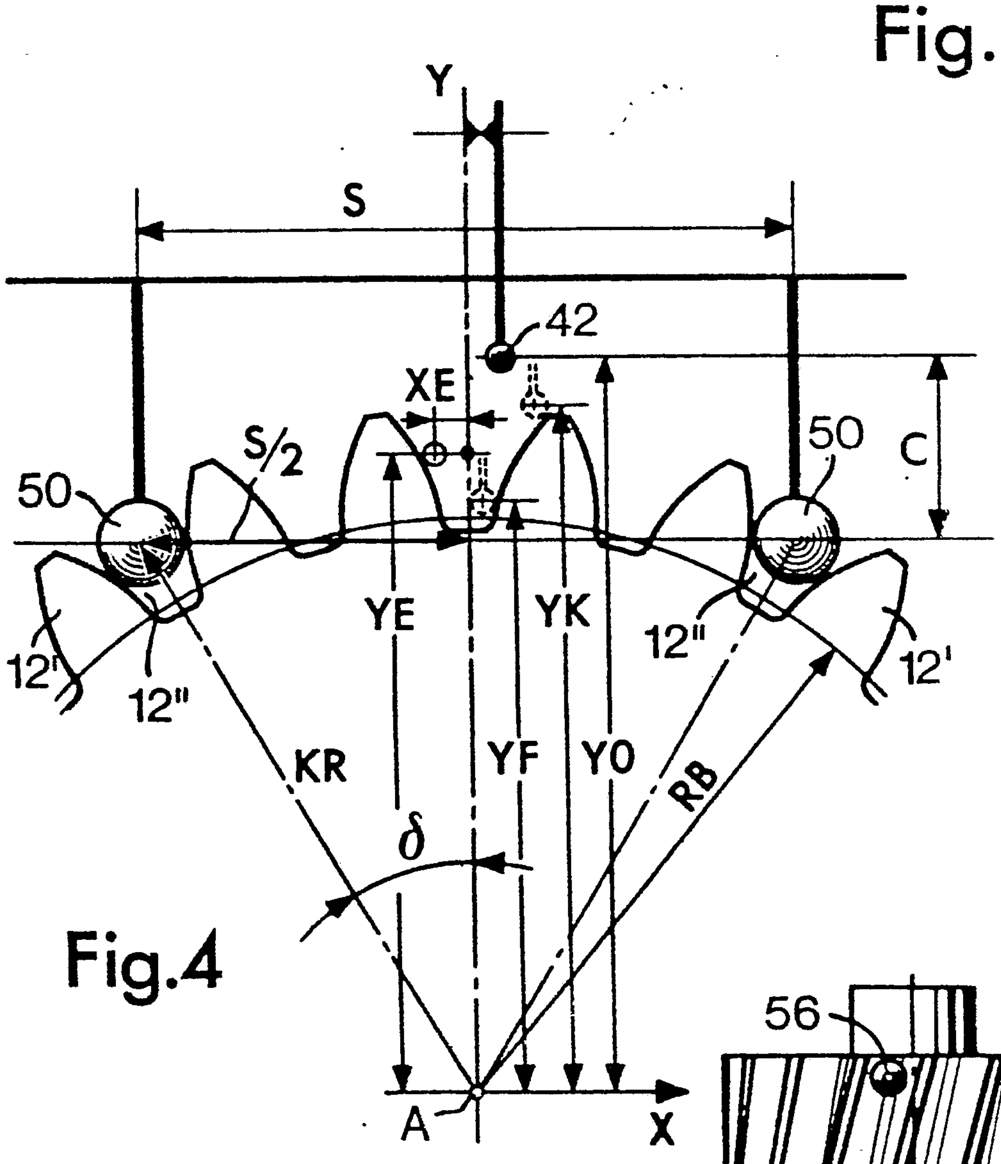


Fig.4

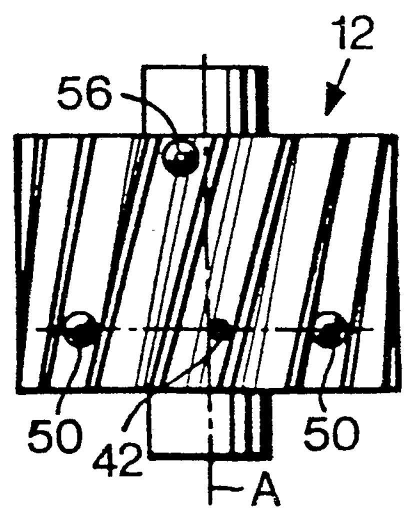


Fig.3

Fig.5

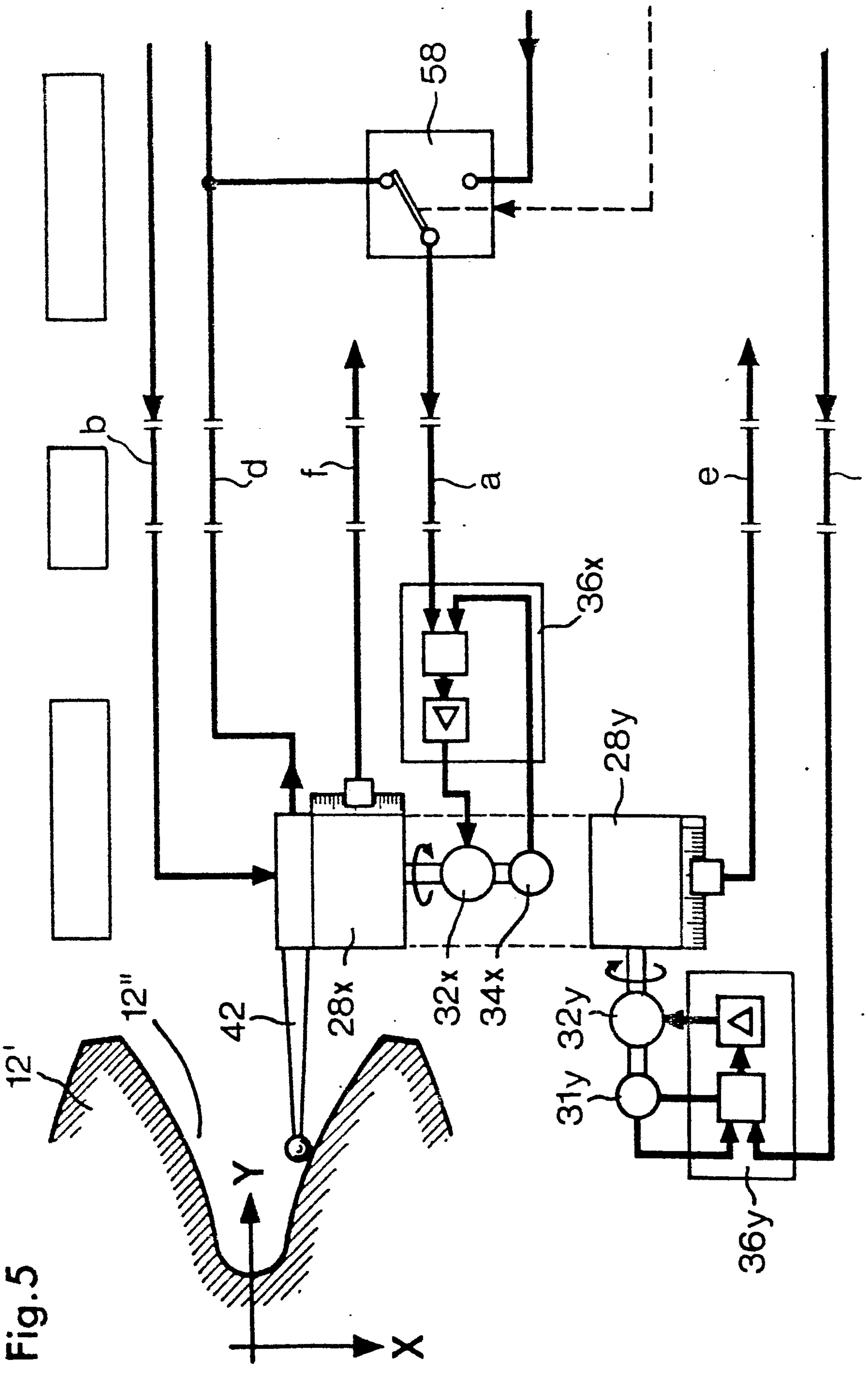

Fig.6

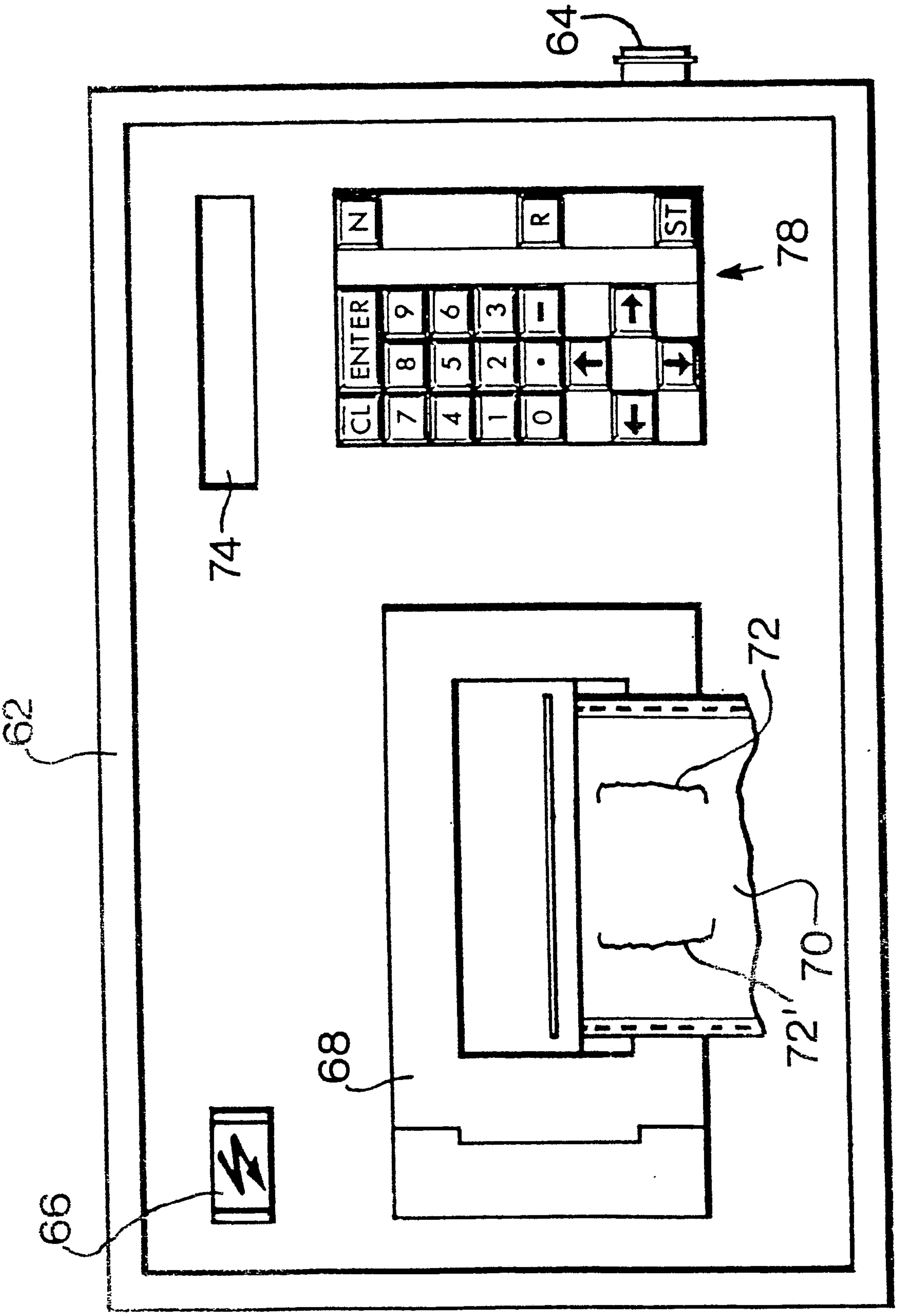

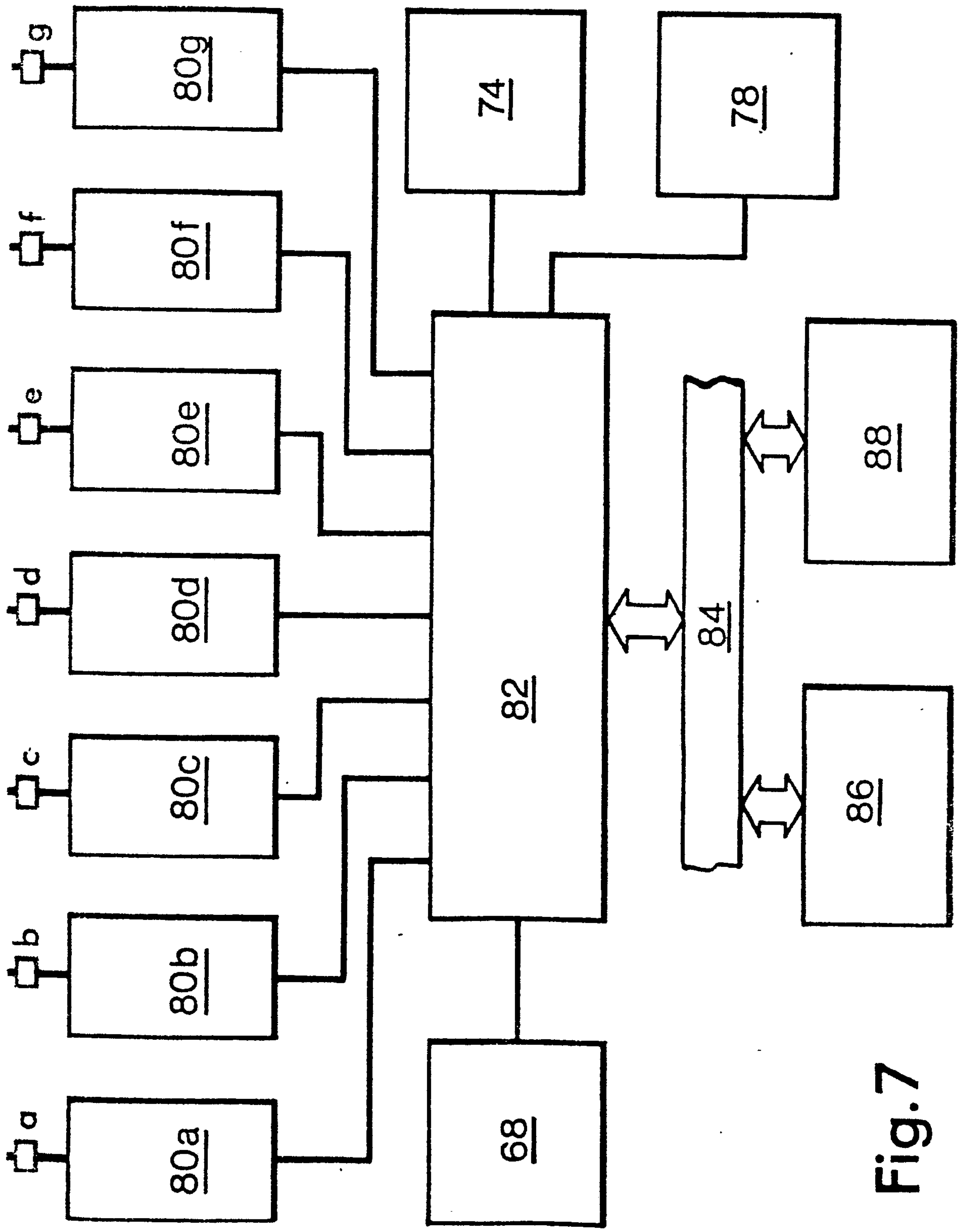


Fig.7

Fig.8

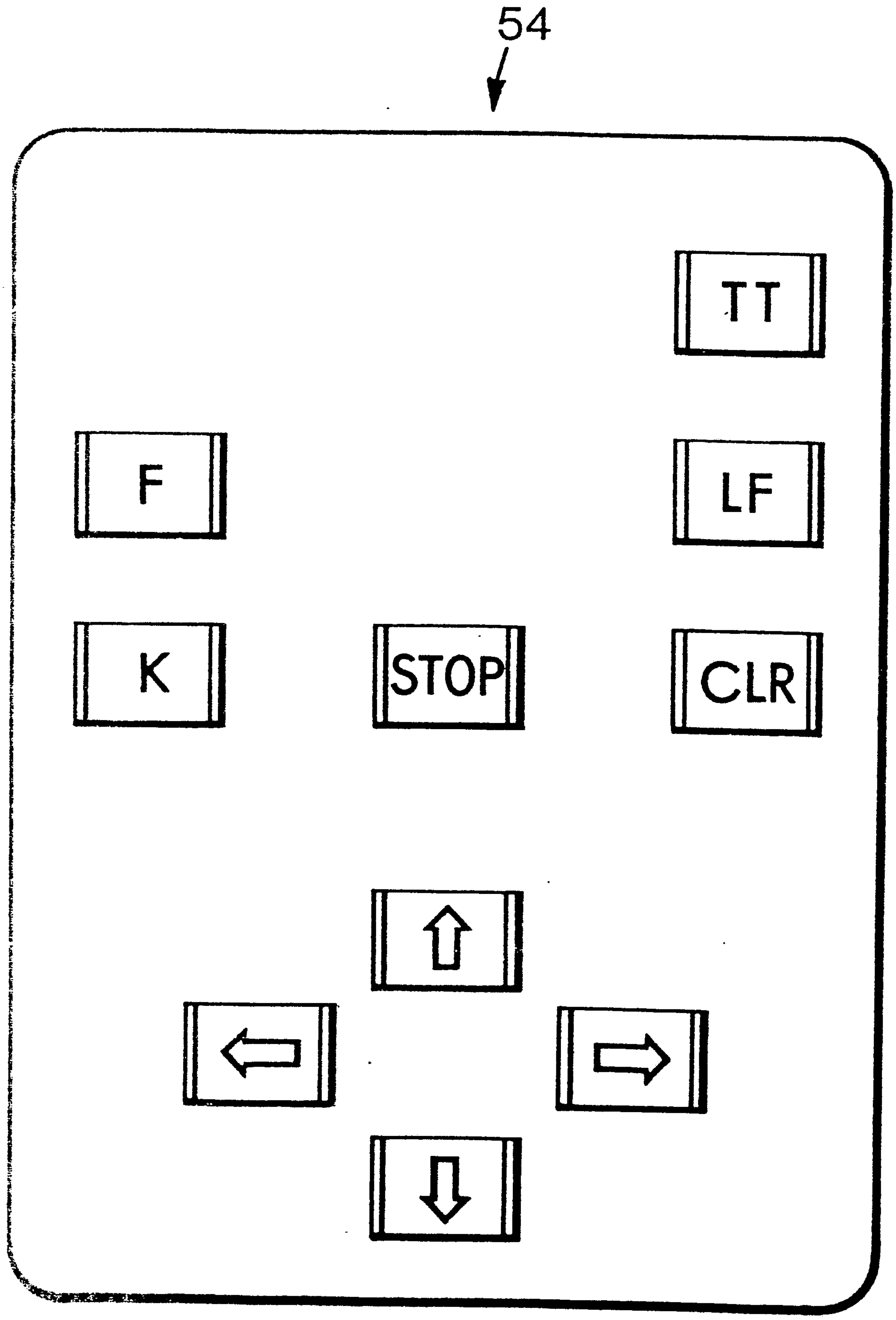

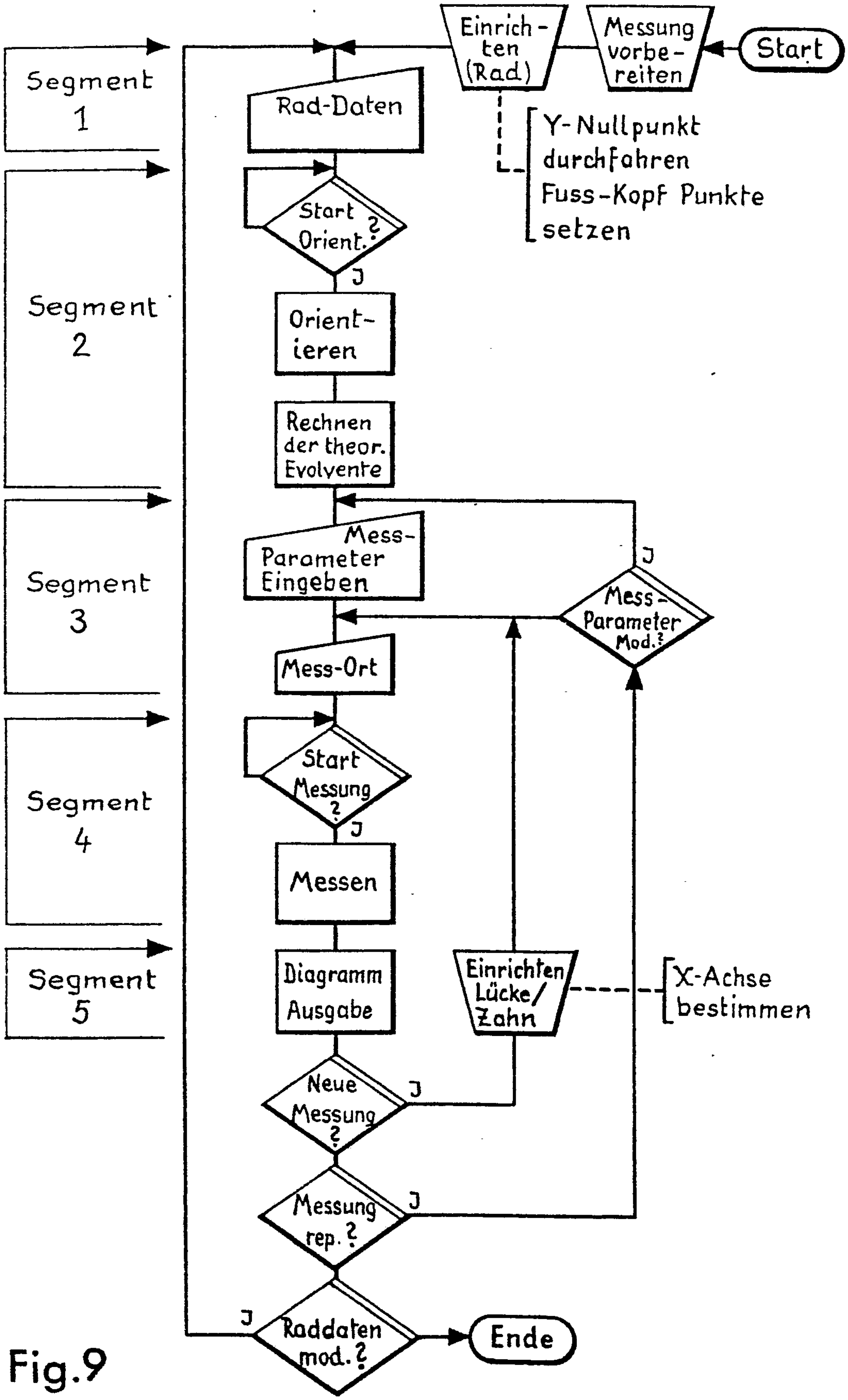
Start
Messung vorbe-reiten
Einrich-ten (Rad)
Y-Nullpunkt durchfahren Fuss-Kopf Punkte setzen
Segment 1
Rad-Daten
Segment 2
Start Orient.?
J
Orient-ieren
Rechnen der theor. Evolvente
Segment 3
Mess-Parameter Eingeben
Mess-Parameter Mod.?
J
Mess-Ort
Segment 4
Start Messung ?
J
Messen
Segment 5
Diagramm Ausgabe
Einrichten Lücke/ Zahn
X-Achse bestimmen
Neue Messung ?
J
Messung rep. ?
J
Raddaten mod. ?
J
Ende

Fig.9

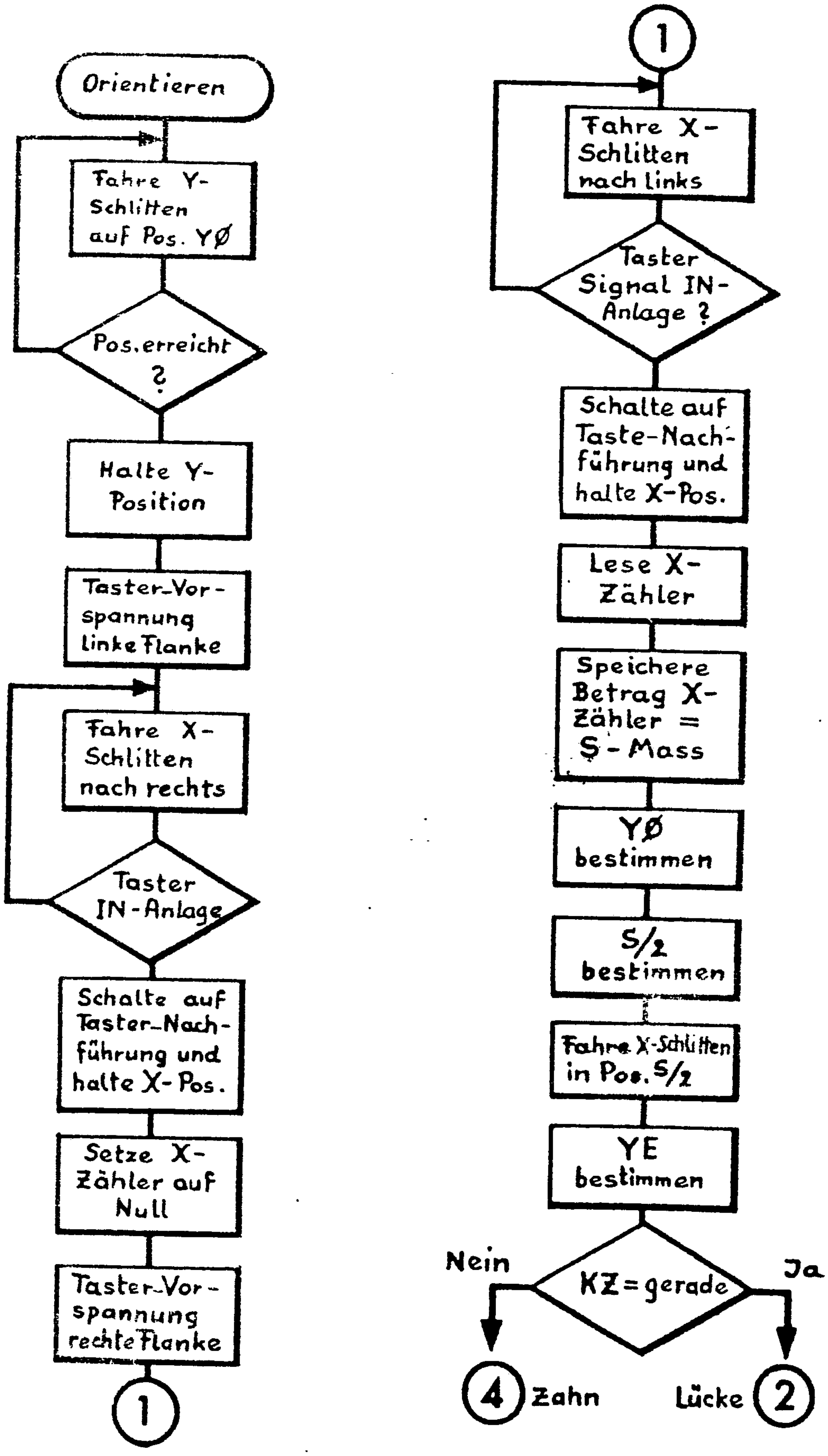
Orientieren
Fahre Y-Schlitten auf Pos. YØ
Pos. erreicht ?
Halte Y-Position
Taster-Vorspannung linke Flanke
Fahre X-Schlitten nach rechts
Taster IN-Anlage
Schalte auf Taster-Nachführung und halte X-Pos.
Setze X-Zähler auf Null
Taster-Vorspannung rechte Flanke
1
1
Fahre X-Schlitten nach links
Taster Signal IN-Anlage ?
Schalte auf Taste-Nachführung und halte X-Pos.
Lese X-Zähler
Speichere Betrag X-Zähler = S-Mass
YØ bestimmen
S/2 bestimmen
Fahre X-Schlitten in Pos. S/2
YE bestimmen
KZ = gerade
Nein
Ja
4 Zahn
Lücke 2

Fig. 10

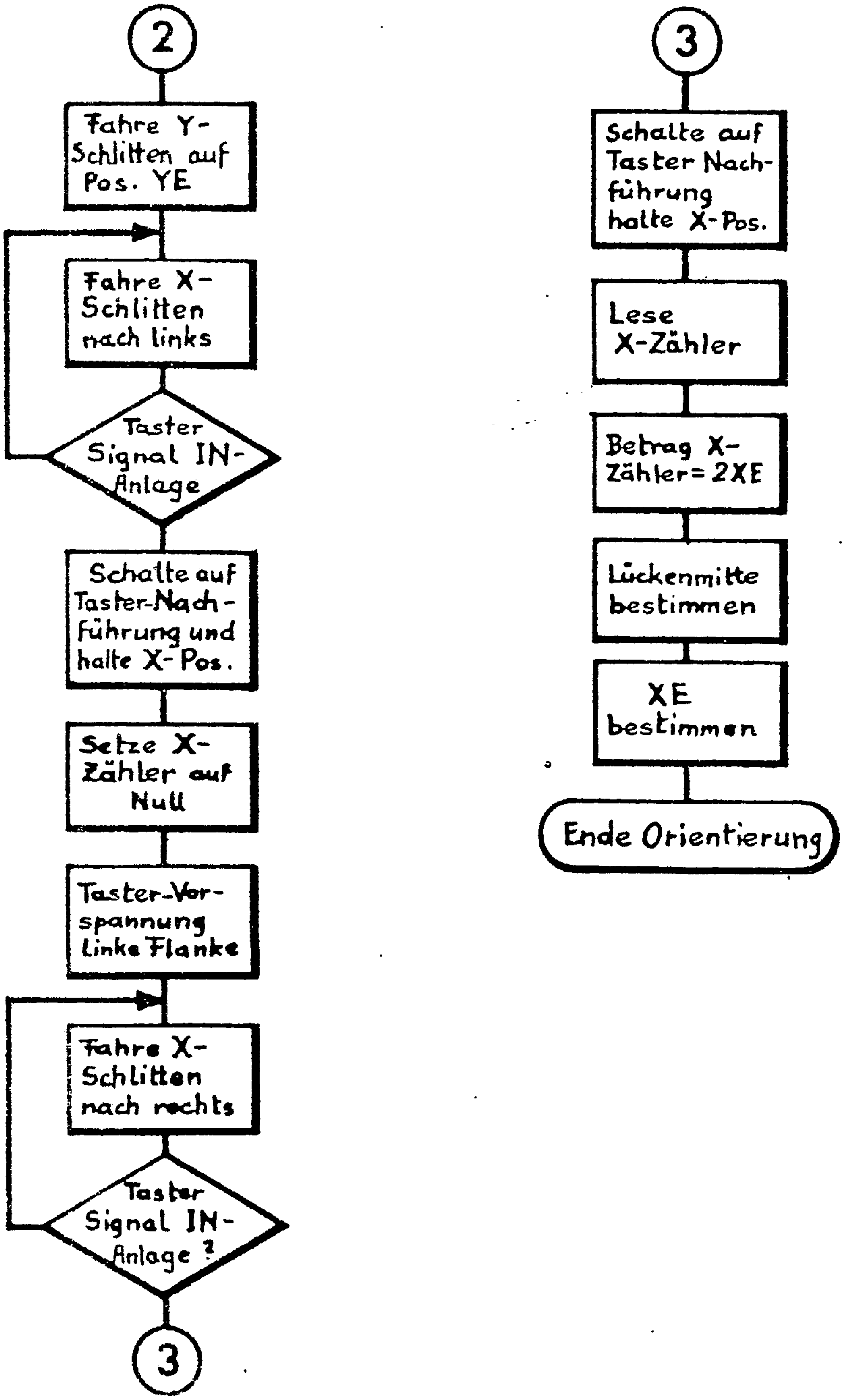
2
Fahre Y-Schlitten auf Pos. YE
Fahre X-Schlitten nach links
Taster Signal IN-Anlage
Schalte auf Taster-Nachführung und halte X-Pos.
Setze X-Zähler auf Null
Taster-Vorspannung Linke Flanke
Fahre X-Schlitten nach rechts
Taster Signal IN-Anlage ?
3
3
Schalte auf Taster Nachführung halte X-Pos.
Lese X-Zähler
Betrag X-Zähler=2XE
Lückenmitte bestimmen
XE bestimmen
Ende Orientierung

Fig.11

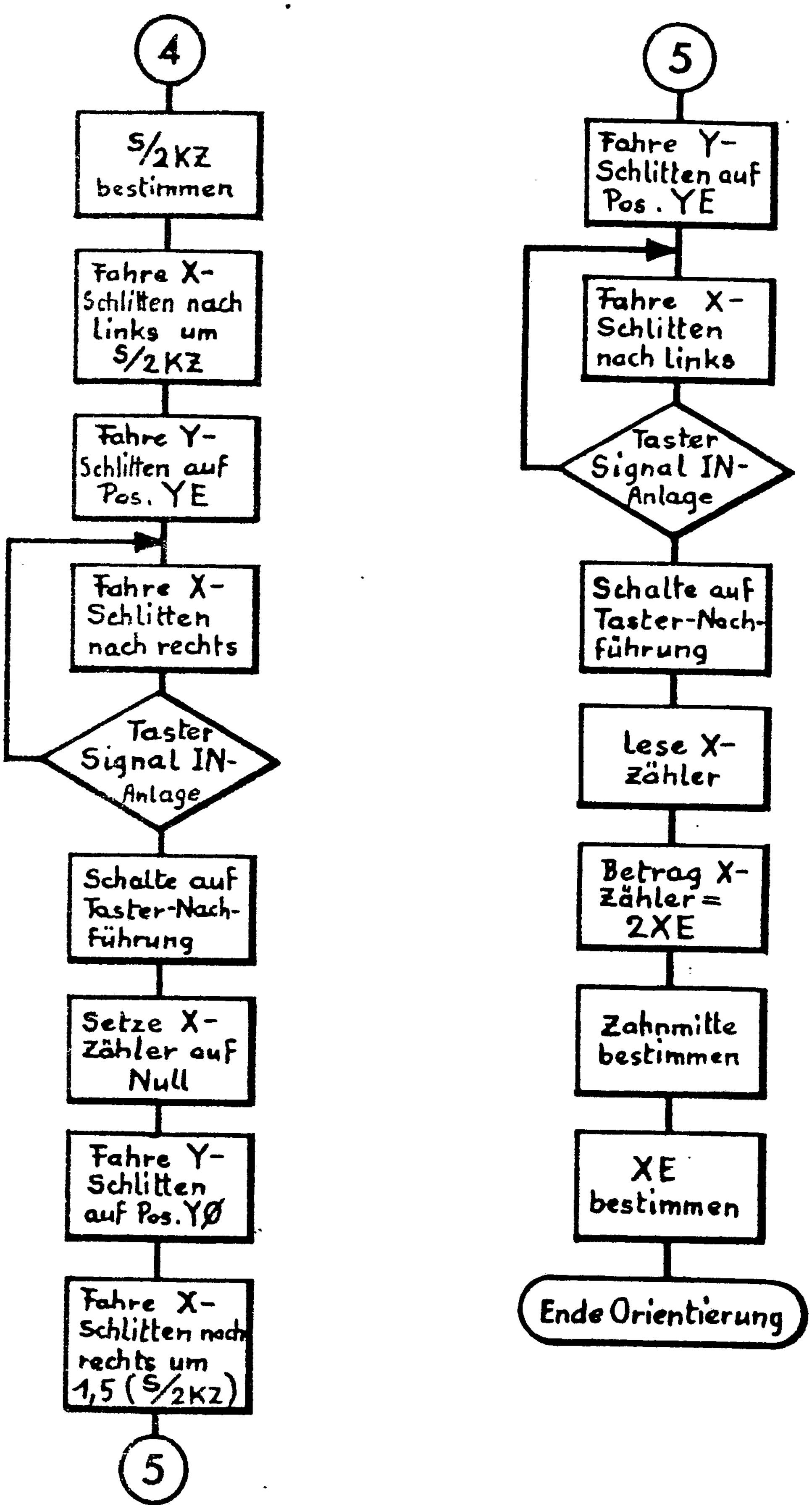
4
S/2KZ bestimmen
Fahre X-Schlitten nach links um S/2KZ
Fahre Y-Schlitten auf Pos. YE
Fahre X-Schlitten nach rechts
Taster Signal IN-Anlage
Schalte auf Taster-Nachführung
Setze X-Zähler auf Null
Fahre Y-Schlitten auf Pos. YØ
Fahre X-Schlitten nach rechts um 1,5 (S/2KZ)
5
5
Fahre Y-Schlitten auf Pos. YE
Fahre X-Schlitten nach links
Taster Signal IN-Anlage
Schalte auf Taster-Nachführung
lese X-zähler
Betrag X-Zähler = 2XE
Zahnmitte bestimmen
XE bestimmen
Ende Orientierung

Fig.12